(19) Europäisches Patentamt
European Patent Office
Office européen des brevets

(11) **EP 2 276 943 B1**

(12) **EUROPÄISCHE PATENTSCHRIFT**

(45) Veröffentlichungstag und Bekanntmachung des Hinweises auf die Patenterteilung:
**11.07.2012 Patentblatt 2012/28**

(51) Int Cl.:
*F16D 55/22* (2006.01)       *F16D 55/226* (2006.01)
*F16D 55/228* (2006.01)

(21) Anmeldenummer: **09741877.6**

(22) Anmeldetag: **06.05.2009**

(86) Internationale Anmeldenummer:
**PCT/EP2009/003233**

(87) Internationale Veröffentlichungsnummer:
**WO 2009/135658 (12.11.2009 Gazette 2009/46)**

(54) **HYDRAULISCHE SCHEIBENBREMSE UND VERFAHREN ZUM STEUERN DERSELBEN**

HYDRAULIC DISC BRAKE AND METHOD FOR CONTROLLING THE SAME

FREIN À DISQUE HYDRAULIQUE ET PROCÉDÉ DE COMMANDE DE CELUI-CI

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **09.05.2008 DE 102008022956**

(43) Veröffentlichungstag der Anmeldung:
**26.01.2011 Patentblatt 2011/04**

(73) Patentinhaber: **KNORR-BREMSE Systeme für Nutzfahrzeuge GmbH**
**80809 München (DE)**

(72) Erfinder:
• **BAUMGARTNER, Johann**
**85368 Moosburg (DE)**
• **PERICEVIC, Aleksandar**
**80636 München (DE)**

(74) Vertreter: **Mattusch, Gundula**
**C/o Knorr-Bremse AG**
**Moosacherstrasse 80**
**80809 München (DE)**

(56) Entgegenhaltungen:
**WO-A-2006/042620     CA-A- 616 746**
**DE-B- 1 131 531     US-A- 3 743 060**
**US-A1- 2003 164 270   US-A1- 2005 121 267**
**US-A1- 2005 127 749**

**Beschreibung**

Die Erfindung betrifft eine hydraulische Scheibenbremse nach dem Oberbegriff des Anspruchs 1 und ein Verfahren zum Steuern derselben.

Scheibenbremsen mit hydraulischer Betätigung über Bremszylinder, die auf eine Zuspannvorrichtung einwirken, sind in verschiedensten Ausgestaltungen, wie z.B in CA-A-616 746 offenbart, bekannt. Es sind weiterhin Bremskraftverstärker bekannt, zum Beispiel Druckluft-Hilfskraftbremsanlagen, die beispielsweise bei mittelschweren Lastwagen und Omnibussen Verwendung finden, die mit hydraulischen Scheibenbremsen ausgerüstet sind. Der Bremskraftverstärker ist zwischen Bremspedal und Hydraulikhauptbremszylinder eingebaut.

Aufgrund gestiegener Bremskraftanforderungen, u.a. bedingt durch die starke Zunahme der Fahrzeuggewichte, stellt zunehmend der von den Betätigungsbremszylindern benötigte Bauraum, deren hohe Volumenaufnahme sowie auch die zur Realisierung der Parkbremsfunktion benötigte Betätigungsenergie ein Problem dar.

Die Aufgabe der vorliegenden Erfindung besteht daher darin, eine hydraulische Scheibenbremse bereitzustellen, wobei die obigen Nachteile entfallen bzw. bedeutend verringert und weitere Vorteile geschaffen sind.

Eine weitere Aufgabe ist es, ein Verfahren zum Steuern einer hydraulischen Scheibenbremse bereitzustellen, bei welchem die obigen Nachteile entfallen bzw. bedeutend verringert sind.

Die Aufgabe wird durch eine Scheibenbremse mit den Merkmalen des Anspruchs 1 und ein Verfahren mit den Merkmalen des Anspruchs 9 gelöst.

Durch die Nutzung der Selbstverstärkung wird nicht nur der benötigte Einbauraum und die Volumenaufnahme der Betätigungsbremszylinder einer hydraulisch betätigten Scheibenbremse reduziert, sondern gleichzeitig wird auch die zur Betätigung einer Parkbremse benötigte Energie deutlich verringert.

Außerdem weist die hydraulisch betätigte Scheibenbremse die Betriebseigenschaften einer hydraulisch betätigten Bremse auf. Dies sind vor allem das sicher selbsttätige Lösen und die exakte Dosierbarkeit der Bremswirkung. Zusätzlich werden die Einfachheit und Robustheit sowie die niedrigen Herstellkosten der hydraulisch betätigten Scheibenbremse beibehalten.

Vorteilhafte Ausbildungen sind in den Unteransprüchen angegeben.

Dazu ist die hydraulische Scheibenbremse so ausgebildet, dass die mindestens eine Verstärkungseinrichtung dem Bremszylinder parallel geschaltet ist, wobei eine weitere Ausführung bevorzugt ist, bei welcher der Bremszylinder mit dem Bremskolben zentral zwischen zwei Verstärkungseinrichtungen angeordnet ist.

Es hat sich überraschenderweise gezeigt, dass bereits mit relativ geringen Selbstverstärkungsfaktoren, zum Beispiel ungefähr 2, eine erhebliche Reduzierung der Baugröße der Bremszylinder, der Volumenaufnahme sowie der zur Betätigung der Parkbremse benötigten Energie ermöglicht wird. Die Selbstverstärkung wird dabei durch entsprechende Dimensionierung von Keil- bzw. Rampenwinkel, zum Beispiel eines Rollen-/Rampensystems der Selbstverstärkungseinrichtung, so gewählt, dass sich auch bei einem maximal möglichen Reibbeiwert der Bremsbeläge noch ein sicheres selbsttätiges Lösen der Bremse ergibt.

Zum Beispiel kann bei einem Berechnungsreibwert von 0,375 der im Betrieb auftretende Reibbeiwert bei Annahme einer Streubandbreite von +/- 20% zwischen 0,3 und 0,45 liegen. Unter Zugrundelegung dieser Reibbelageigenschaften kann ein sicheres Rückstellverhalten mit noch ausreichend hohen Rückstellkräften für schnelles selbsttätiges Lösen erzielt werden, wenn der Keil- bzw. Rampenwinkel mit Berücksichtigung der mechanischen Verluste einem Betrag von Eta*$\mu$=0,65 entspricht (Eta = mechanischer Wirkungsgrad, $\mu$ = Belagreibwert).

Bei einer derartigen Auslegung wird nicht nur der Bauraum und Energiebedarf des Betriebsbremszylinders halbiert, sondern auch die benötigte Stellenergie der Parkbremse, zum Beispiel einer Parkbrems-Speicherfeder, da bei Abstellen des Fahrzeugs an einer Steigung infolge der wirkenden Hangabtriebskraft die Selbstverstärkung auch im Parkbremsfall wirksam wird.

In weiterer Ausgestaltung ist vorgesehen, dass der Bremskolben mit dem wenigstens einen Bremsbelag über einen Kopplungsabschnitt gekoppelt ist. Der Kopplungsabschnitt kann Gleitelemente und/oder Rollen aufweisen, welche eine reibungsarme Kraftübertragung vom Bremskolben auf den Bremsbelag ermöglichen.

Die hydraulische Scheibenbremse kann eine Nachstelleinrichtung zur Nachstellung eines Belagverschleißes aufweisen, sowie für die Funktion einer Parkbremse vorgesehen sein.

Mit dem Verfahren zum Steuern einer hydraulischen Scheibenbremse ist es möglich, einen übermäßige Selbstverstärkung infolge von Reibwertstreuungen zu kompensieren. Dazu ist das Steuerventil hydraulisch in Reihe mit dem Bremszylinder geschaltet.

Das Steuerventil kann in einer Ausführung mit der Aufweitung des Bremssattels und dem Bremsdruck als Eingangsgrößen hydraulisch geregelt sein. Dazu kann es im Bremssattel so angeordnet sein, dass dessen Aufweitung und der Bremsdruck hydraulisch auf das Steuerventil als Regelung einwirken, zum Beispiel kann die Aufweitung eine Verschiebung eines Kolbens bewirken, der von der anderen Seite mit dem Bremsdruck in geeigneter Weise beaufschlagt ist.

In alternativer Ausführung kann das Steuerventil von einer elektronischen Steuereinrichtung gesteuert werden, welche zur Messung der Aufweitung des Bremssattels und des Bremsdrucks mittels geeigneter Messeinrichtungen ausgebildet ist. Diese Messeinrichtungen können zum Beispiel als Drucksensoren, Kraftsensoren, Dehnungsmessstreifen u. dgl. ausgebildet sein.

Die Erfindung wird nun anhand von beispielhaften Ausführungen mit Bezug auf die beigefügten Zeichnungen näher erläutert. Hierbei zeigen:

Fig. 1 eine schematische Schnittdarstellung eines ersten Ausführungsbeispiels einer erfindungsgemäßen Scheibenbremse;

Fig. 2 eine schematische Schnittdarstellung eines zweiten Ausführungsbeispiels der erfindungsgemäßen Scheibenbremse;

Fig. 3 eine schematische Schnittdarstellung des ersten Ausführungsbeispiels nach Fig. 1 mit einer Verschleißnachstellung; und

Fig. 4 eine schematische Darstellung von Kräftegleichgewichtsbedingungen.

Bauteile bzw. -elemente, welche gleiche oder ähnliche Funktionen aufweisen, sind in den Figuren mit gleichen Bezugszeichen versehen.

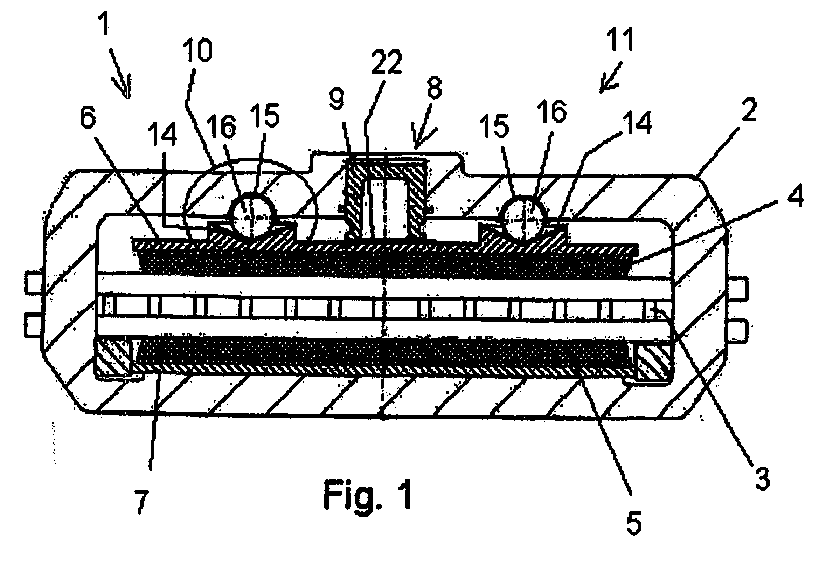

Fig. 1 ist eine schematische Schnittdarstellung eines ersten Ausführungsbeispiels einer erfindungsgemäßen hydraulischen Scheibenbremse 1.

Ein Bremssattel 2 übergreift eine Bremsscheibe 3, an welcher beidseitig Bremsbeläge 4, 5 angeordnet sind. Der eine Bremsbelag 4 ist an einer Druckplatte mit Belagträger 6 angebracht, und der andere Bremsbelag 5 ist über einen Belagträger 7 im Bremssattel 3 an einem Bremsträger 20 festgelegt. Der Bremssattel 2 ist in diesem ersten Ausführungsbeispiel ein Schiebesattel.

Der eine Bremsbelag 4 steht mit seiner Druckplatte mit Belagträger 6 über einen zentralen Koppelabschnitt 22 mit einem Bremskolben 9 eines Bremszylinders 8 in Verbindung. Die zugehörige Hydraulikanlage ist nicht gezeigt. Der Koppelabschnitt 22 kann zum Beispiel nicht näher dargestellte Gleitelemente oder Rollen aufweisen. Weiterhin sind parallel und symmetrisch zu dem zentral angeordneten Bremszylinder 8 mit Bremskolben 9 Verstärkungseinrichtungen 10, 11 vorgesehen. Es kann auch nur eine Verstärkungseinrichtung 10, 11 angeordnet sein.

Jede Verstärkungseinrichtung 10, 11 besitzt hier ein Rollen-/Rampensystem mit jeweils einen Rollkörper 16, der hier als Kugel ausgebildet ist. Der Rollkörper 16 steht mit der Druckplatte 6 über Rampen 14 in Verbindung, die von einem mittleren Punkt aus beidseitig des Rollkörpers 16 von der Druckplatte 6 hervorstehen. Weiterhin ist der Rollkörper 16 in der Innenwand des Bremssattels 2 in einer Gleitlagerschale 15 gehalten.

Bei einer Bremsbetätigung übt der hydraulische Druck über den Bremskolben 9 des Bremszylinders 8 eine Kraft über die Druckplatte 6 auf den Bremsbelag 4 aus. Nachdem der Bremsbelag 4 auf diese Weise an die Bremsscheibe 3 angelegt worden ist, werden durch die dann als Folge der Reibkraft zwischen Bremsbelag 4 und Bremsscheibe 3 erfolgende Umfangsverschiebung des Bremsbelages 4 die Verstärkungseinrichtungen 10, 11 aktiviert.

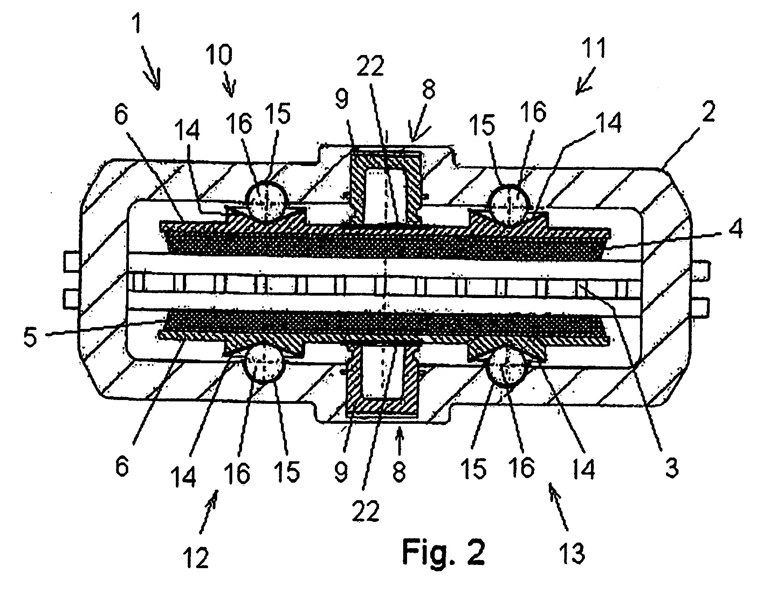

Fig. 2 zeigt eine schematische Schnittdarstellung eines zweiten Ausführungsbeispiels der erfindungsgemäßen Scheibenbremse 1 mit einem Festsattel als Bremssattel 2. Der Aufbau entspricht dem der Fig. 1 mit dem Unterschied, dass auf beiden Seiten der Bremsscheibe 3 jeweils ein Bremszylinder 8 mit Bremskolben 9 angeordnet ist. Die Bremszylinder 8 sind hier ebenfalls jeweils zentral zwischen je zwei Verstärkungseinrichtungen 10, 11 und 12, 13 angeordnet, die jeweils parallel und symmetrisch zu den Bremszylinder 8 sind. In diesem Fall kann in der Regel auf eine Verschleißnachstellsystem verzichtet werden, da die Rampen 14 über ein ausreichendes Nachstellvermögen verfügen, um den Verschleiß jeweils eines Bremsbelages 4, 5 auszugleichen. Bei Schiebesattelbremsen empfiehlt es sich jedoch wegen der großen Nachstellwege ein Verschleißnachstellsystem an den Verstärkungseinrichtungen 10, 11 anzuordnen.

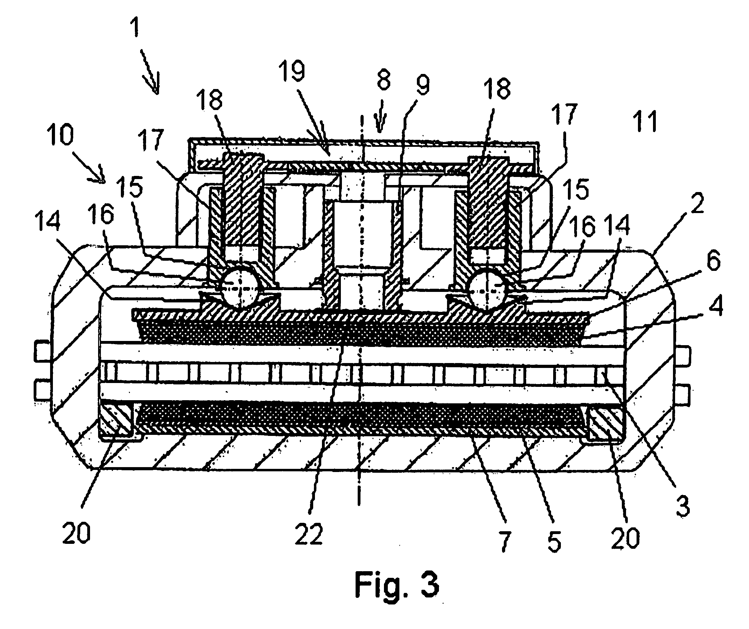

Hierzu zeigt Fig. 3 eine schematische Schnittdarstellung des ersten Ausführungsbeispiels nach Fig. 1 mit einer Verschleißnachstellung mittels einer Nachstelleinrichtung 19. Vorzugsweise wirkt diese mit längenveränderlichen Nachstellkolben 17 zusammen, in welche Nachstellspindeln 18 in Form von Schraubelementen eingebracht sind. Die Nachstellkolben 17 sind im Bremssattel 2 geführt und gehalten, wobei an ihren unteren Enden die Gleitlagerschalen 15 der Verstärkungseinrichtungen 10, 11 angeordnet sind.

Die Vorteile der erfindungsgemäßen hydraulischen Scheibenbremse 1 zum Stand der Technik sind die folgenden:

● Kleinere Bremszylinder, geringere Volumenaufnahme und reduzierte Betätigungsenergie für eine Parkbremseinrichtung.
● Kleinere Dimensionierung von Bremskraftverstärker und Hauptbremszylinder.
● Relativ schwere Fahrzeuge können mit Hilfskraftbremsanlagen betrieben werden.

● Kein Umbruch in der Technologie der Bremsensteuerung. Die Bremse erhält sich für die Bremsensteuerung wie eine normale hydraulisch betätigte Bremse.

Hauptmerkmale sind:

● Bauart der Bremse mit einem mittig angeordnetem Bremszylinder 8 und zwei Verstärkungseinrichtungen 10, 11 bzw. 12, 13.
● Eine Führungsplatte überträgt die Umfangskraft von den Verstärkungseinrichtungen 10, 11, 12, 13 direkt auf das achsfeste Bauteil der Bremse (nur optional, bei Festsattelbremse ohne Nachstelleinrichtung ist die Führungsplatte nicht erforderlich).
● Reibungsarme Kraftübertragung von Bremskolben 9 auf Druckplatte 6 über Kopplungsabschnitt 22 mit Gleitelementen oder Rollen.
● Die Selbstverstärkung wird so gewählt, dass die am Keil-/Rampensystem wirksam werdende tangentiale Rückstellkraft bei dem maximal möglichen Reibwert des Bremsbelages 4, 5 und unter Berücksichtigung der mechanischen Verluste noch so hoch ist, dass sich auch im Falle von ABS-Regelvorgängen noch ein ausreichend schnelles, selbsttätiges Lösen der Bremse ergibt.

Zur Bestimmung des maximal möglichen Belagreibwertes kann erfahrungsgemäß ein Reibwertstreuband von +/- 20% des Berechnungsreibwertes zugrunde gelegt werden.

Die mindest erforderliche tangentiale Rückstellkraft wurde bei Versuchen mit einem Betrag von ca. 10% der Gesamtspannkraft der Bremse ermittelt. Der Betrag ist von der Höhe der Reibwiderstände und von den bewegten Massen abhängig. Dieser Betrag erscheint zunächst niedrig, da ja bei einer normalen hydraulisch betätigten Scheibenbremse ohne Selbstverstärkung die gesamte Spannkraft der Bremse zum schnellen Lösen zur Verfügung steht. Eine Analyse des Lösevorgangs zeigt jedoch, dass die Lösezeit wesentlich durch den Strömungswiderstand des aus dem Bremszylinder 8 ausströmenden Bremsfluids bestimmt wird. Da bei der selbstverstärkenden Bremse, also bei der hydraulischen Scheibenbremse mit Verstärkungseinrichtungen 10, 11, 12, 13, auch ein erheblich geringeres Fluidvolumen aus dem/den Bremszylinder/n 8 ausströmen muss, wird der Einfluss der geringeren Rückstellkraft kompensiert.

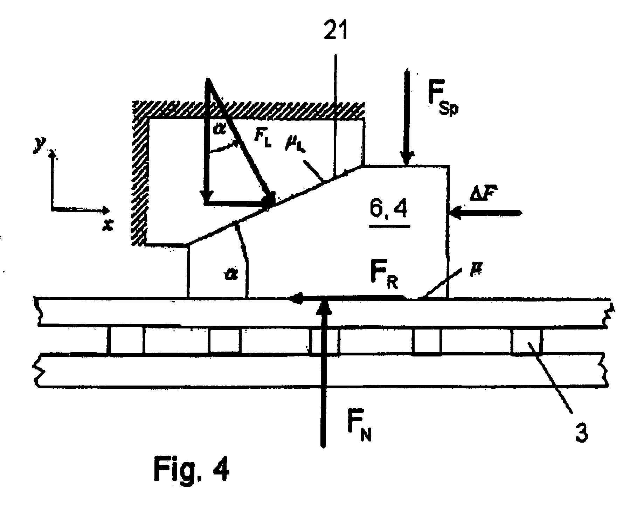

Fig. 4 zeigt eine schematische Darstellung von Kräftegleichgewichtsbedingungen.

Aus den Gleichgewichtsbedingungen in x- und $\gamma$-Richtung folgt:

$$\sum F_x = 0 = -F_R + F_L \cdot \sin(\alpha \pm \gamma) - \Delta F \qquad (I)$$

$$\sum F_y = 0 = F_N - F_L \cdot \cos(\alpha \pm \gamma) - F_{Sp} \qquad (II)$$

Dabei ist der Winkel $\gamma$ der Reibwinkel in der Keilrampe 21 und lässt sich durch die Beziehung $\gamma = \arctan(\mu_L)$ ermitteln. Je nach Bewegungsrichtung des Bremsbelages 4 (mit Druckplatte 6) hat dieser Reibwinkel einen unterschiedlichen Einfluss auf den effektiven Keilwinkel $\alpha$. Bei Bewegung des Bremsbelages 4 in Zuspannrichtung wirkt die Reibung in der Keilrampe 21 dieser Bewegung entgegen. Somit wird der effektive Keilwinkel $\alpha$ um den Betrag des Reibwinkels $\gamma$ erhöht (Rückstellvermögen des Keils wird größer). In Löserichtung ist dieser Zusammenhang genau umgekehrt, d. h. der effektive Keilwinkel $\alpha$ wird um den Betrag des Reibwinkels $\gamma$ verkleinert (Rückstellvermögen des Keils wird kleiner).

Für die Zuspannrichtung gilt somit $\alpha_{eff} = \alpha + \gamma$ und für die Löserichtung $\alpha_{eff} = \alpha - \gamma$.

Aus Gleichgewichtsbeziehung (I) folgt: $F_L = \dfrac{1}{\sin(\alpha \pm \gamma)} \cdot (\mu \cdot F_N + \Delta F)$, eingesetzt in (II) ergibt sich:

$$\frac{\Delta F}{F_N} = \tan(\alpha \pm \gamma) - \mu - \frac{F_{Sp}}{F_N} \cdot \tan(\alpha \pm \gamma) \qquad (III).$$ Im normalen Bremsbetrieb ist das

Verhältnis $\dfrac{\Delta F}{F_N} = 0$, da der Aktuator bzw. Bremszylinder 8 mit Bremskolben 9 (hier nicht dargestellt) die Kraftdifferenz

von $F_N \cdot (\tan(\alpha \pm \gamma) - \mu)$ vollständig ausgleicht. Der Aktuator bzw. Bremszylinder 8 mit Bremskolben 9 kann so ausgebildet sein, dass dieser sowohl in tangentialer (x) als auch in normaler Richtung (y) Kräfte übertragen kann.

In einer ABS-Bremsung kommt es darauf an, die Zuspannkraft $F_N$ so schnell wie möglich abzubauen, um ein Blockieren des zugehörigen Rades zu verhindern. Bei reiner Betrachtung des Bremsbelags kann die Beziehung (III) folgendermaßen umgeschrieben werden: $\Delta F/F_N = \tan(\alpha-\gamma) - \mu$ (IV).

Die Aktuatorkraft wird zunächst vernachlässigt (d. h. $F_{SP} = 0$). Die resultierende Rückstellkraft aus dem Keil muss in der Lage sein, den Belag als auch die verbleibende Aktuatorkraft (Entlüftungswiderstand des Bremszylinders 8, Wirkungsgrad der Aktuatormechanik und Massenträgheit) schnell genug in Lösestellung zu bringen bzw. zu überwinden. Aus der bisherigen Erfahrung ergibt sich folgender Zusammenhang:

$$\frac{\Delta F}{F_N} \geq 0{,}1$$

Die Erfindung ist nicht auf die oben beschriebenen Ausführungsbeispiele beschränkt. Sie ist im Rahmen der beigefügten Ansprüche modifizierbar.

Die Rampen 14 können anstelle an der Druckplatte 6 an der Innenseite des Bremssattels 2 angebracht sein.

Bezugszeichenliste

| | |
|---|---|
| 1 | Scheibenbremse |
| 2 | Bremssattel |
| 3 | Bremsscheibe |
| 4, 5 | Bremsbelag |
| 6 | Druckplatte mit Belagträger |
| 7 | Belagträger |
| 8 | hydraulischer Bremszylinder |
| 9 | Bremskolben |
| 10, 11, 12, 13 | Verstärkungseinrichtung |
| 14 | Rampe |
| 15 | Gleitlagerschale |
| 16 | Rollkörper |
| 17 | Nachstellkolben |
| 18 | Nachstellspindel |
| 19 | Nachstelleinrichtung |
| 20 | Bremsträger |
| 21 | Keilrampe |
| 22 | Kopplungsabschnitt |
| x, y | Koordinaten |

**Patentansprüche**

1. Hydraulische Scheibenbremse (1) mit einem eine Bremsscheibe (3) übergreifenden Bremssattel (2), in welchem zumindest ein hydraulischer Bremszylinder (8) mit einem Bremskolben (9) zur Aufbringung einer Zuspannkraft auf wenigstens einen Bremsbelag (4, 5) in Richtung einer Bremsscheibe (3) angeordnet ist, mindestens einer Verstärkungseinrichtung (10, 11, 12, 13) mit Selbstverstärkungseigenschaften, **dadurch gekennzeichnet daß** die mindestens eine Verstärkungseinrichtung ein Rollen-/Rampensystem mit einem Keil/Rampenwinkel mit einem Betrag von 0,65 (mechanischer Wirkungsgrad Eta*Belagreibwert $\mu$) für einen Selbstverstärkungsfaktor aufweist, der so gewählt ist, dass ein sicheres selbsttätiges Öffnen der Scheibenbremse (1) bereitgestellt ist, und eine tangentiale Rückstellkraft von mindestens zehn Prozent einer Gesamtspannkraft der hydraulischen Scheibenbremse (1), wobei ein hydraulisch oder/und elektronisch steuerbares Steuerventil mit dem hydraulischen Bremszylinder (8) hydraulisch in Reihe geschaltet ist.

2. Hydraulische Scheibenbremse (1) nach Anspruch 1, **dadurch gekennzeichnet, dass** die mindestens eine Verstärkungseinrichtung (10, 11, 12, 13) dem Bremszylinder (9) parallel geschaltet ist.

3. Hydraulische Scheibenbremse (1) nach Anspruch 2, **dadurch gekennzeichnet, dass** der Bremszylinder (8) mit dem Bremskolben (9) zentral zwischen zwei Verstärkungseinrichtungen (10, 11, 12, 13) angeordnet ist.

4. Hydraulische Scheibenbremse (1) nach einem der vorhergehenden Ansprüche, **dadurch gekennzeichnet, dass** der Bremskolben (9) mit dem wenigstens einen Bremsbelag (4, 5) über einen Kopplungsabschnitt (22) gekoppelt ist.

5. Hydraulische Scheibenbremse (1) nach Anspruch 4, **dadurch gekennzeichnet, dass** der Kopplungsabschnitt (22) Gleitelemente und/oder Rollen aufweist.

6. Hydraulische Scheibenbremse (1) nach einem der vorhergehenden Ansprüche, **dadurch gekennzeichnet, dass** die mindestens eine Verstärkungseinrichtung (10, 11, 12, 13) ein Rollen-/Rampensystem (14, 15, 16) aufweist.

7. Hydraulische Scheibenbremse (1) nach einem der vorhergehenden Ansprüche, **dadurch gekennzeichnet, dass** die Scheibenbremse (1) eine Nachstelleinrichtung (19) zur Nachstellung eines Belagverschleißes aufweist.

8. Hydraulische Scheibenbremse (1) nach einem der vorhergehenden Ansprüche, wobei die hydraulische Scheibenbremse (1) für eine Parkbremsfunktion vorgesehen ist.

9. Verfahren zum Steuern einer hydraulischen Scheibenbremse (1) nach einem der vorhergehenden Ansprüche, mit folgenden Verfahrensschritten:

   Ermitteln einer Aufweitung des Bremssattels (2) und des vorliegenden Bremsdrucks des Bremszylinders (8);
   Ermitteln einer Korrelation zwischen der Aufweitung des Bremssattels (2) und des vorliegenden Bremsdrucks; und
   Reduzieren des Bremsdrucks durch das Steuerventil zum Steuern des Bremsdrucks der hydraulischen Scheibenbremse (1), wenn eine dem vorliegenden Bremsdruck zugeordnete Aufweitung des Bremssattels (2) einen vorher festlegbaren Schwellwert überschreitet.

10. Verfahren nach Anspruch 9, **dadurch gekennzeichnet, dass** das Steuerventil mit der Aufweitung des Bremssattels (2) und dem Bremsdruck als Eingangsgrößen hydraulisch geregelt wird.

11. Verfahren nach Anspruch 9, **dadurch gekennzeichnet, dass** das Steuerventil von einer elektronischen Steuereinrichtung gesteuert wird, welche zur Messung der Aufweitung des Bremssattels (2) und des Bremsdrucks mittels geeigneter Messeinrichtungen ausgebildet ist.

## Claims

1. Hydraulic disc brake (1) comprising a brake calliper (2) enclosing a brake disc (3), wherein at least a single hydraulic brake cylinder (8) with a braking piston (9) is disposed for creating a brake application force on at least one single brake lining (4, 5) in a direction towards a brake disc (3), and at least a single amplifier means (10, 11, 12, 13) provided with self-amplifying properties, **characterized in that** said at least single amplifier means comprises a roller/ramp system having a wedge angle of 0,65 (mechanical efficiency eta*coefficient of friction of the brake lining $\mu$) for a self-amplifying factor selected in such a way that reliable automatic release of the disc brake (1) will be provided, and having a tangential restoring force of at least ten percent of a total application force of the hydraulic disc brake (1), with a hydraulically and/or electronically controllable control valve being hydraulically mounted in series relative to said hydraulic brake cylinder (8).

2. Hydraulic disc brake (1) according to Claim 1, **characterized in that** said at least single amplifier means (10, 11, 12, 13) is mounted in parallel with said brake cylinder (9).

3. Hydraulic disc brake (1) according to Claim 2, **characterized in that** said brake cylinder (8) with said braking piston (9) is mounted centrally between two amplifier means (10, 11, 12, 13).

4. Hydraulic disc brake (1) according to any of the preceding Claims, **characterized in that** said braking piston (9) is coupled to said at least single brake lining (4, 5) via a coupler section (22).

5. Hydraulic disc brake according to Claim 4, **characterized in that** said coupler section (22) comprises sliding elements and/or rollers.

**6.** Hydraulic disc brake according to any of the preceding Claims, **characterized in that** said at least single amplifier means (10, 11, 12, 13) comprises a roller/ramp system (14, 15, 16).

**7.** Hydraulic disc brake (1) according to any of the preceding Claims, **characterized in that** the disc brake (1) comprises a readjustment means (19) for readjustment of the brake lining wear.

**8.** Hydraulic disc brake according to any of the preceding Claims, wherein the hydraulic disc brake (1) is provided for a parking brake function.

**9.** Method of controlling a hydraulic disc brake (1) according to any of the preceding Claims, comprising the following steps:

   detecting an expansion of said brake calliper (2) and a currently applied braking pressure of said brake cylinder (8);
   detecting a correlation between the expansion of said brake calliper (2) and the currently applied braking pressure; and
   reducing the braking pressure by means of said control valve in order to control the braking pressure of the hydraulic disc brake (1) when an expansion of said brake calliper (2), which is associated with the currently applied braking pressure, exceeds a threshold value that can be determined in advance.

**10.** Method according to Claim 9, **characterized in that** said control valve is hydraulically controlled by use of the expansion of said brake calliper (2) and the braking pressure as input parameters.

**11.** Method according to Claim 9, **characterized in that** said control valve is controlled by an electronic control means that is configured for measuring the expansion of said brake calliper (2) and the braking pressure by application of appropriate metrological means.

**Revendications**

**1.** Frein à disque hydraulique (1) comprenant un étrier de frein (2) chevauchant un disque de frein (3), dans lequel au moins un seul cylindre de freinage hydraulique (8) à un piston de freinage (9) est disposé afin d'exercer un effort d'application sur au moins une seule garniture de frein (4, 5) en un sens vers un disque de frein (3), et au moins un seul moyen renforçateur (10, 11, 12, 13) ayant des caractéristiques d'autorenforcement, **caractérisé en ce que** ledit au moins seul moyen renforçateur comprend un système à rouleaux/rampes ayant un angle de bord d'attaque/de rampe de 0,65 (rendement mécanique eta\*coefficient de friction de garniture $\mu$) pour un facteur d'autorenforcement choisi d'une telle façon, qu'un desserrage fiable automatique du frein à disque (1) soit mis à disposition, et ayant une force de rappel tangentielle d'au moins dix pour cent d'un effort total de serrage du frein à disque hydraulique (1), à une vanne-pilote à commande hydraulique ou/et électronique étant montée par voie hydraulique en série avec ledit cylindre de freinage hydraulique (8).

**2.** Frein à disque hydraulique (1) selon la revendication 1, **caractérisé en ce que** ledit au moins seul moyen renforçateur (10, 11, 12, 13) est monté en parallèle audit cylindre de freinage (9).

**3.** Frein à disque hydraulique (1) selon la revendication 2, **caractérisé en ce que** ledit cylindre de freinage (8) avec ledit piston de freinage (9) est disposé en position centrale entre deux moyens renforçateurs (10, 11, 12, 13).

**4.** Frein à disque hydraulique (1) selon une quelconque des revendications précédentes, **caractérisé en ce que** ledit piston de freinage (9) est accouplé à ladite au moins seule garniture de frein (4, 5) via une partie d'accouplement (22).

**5.** Frein à disque hydraulique selon la revendication 4, **caractérisé en ce que** ladite partie d'accouplement (22) comprend des éléments de glissement et/ou des rouleaux.

**6.** Frein à disque hydraulique selon une quelconque des revendications précédentes, **caractérisé en ce que** ledit au moins seul moyen renforçateur (10, 11, 12, 13) comprend un système à rouleaux/rampes (14, 15, 16).

**7.** Frein à disque hydraulique (1) selon une quelconque des revendications précédentes, **caractérisé en ce que** le frein à disque (1) comprend un moyen de rattrapage (19) afin de rattraper le jeu dû à l'usure de la garniture.

**8.** Frein à disque hydraulique selon une quelconque des revendications précédentes, dans lequel le frein à disque hydraulique (1) est envisagé pour une fonction de freinage de stationnement.

**9.** Procédé à commander un frein à disque hydraulique (1) selon une quelconque des revendications précédentes, comprenant les étapes suivantes:

établir un élargissement dudit étrier de frein (2) et de la pression de freinage actuellement appliquée dudit cylindre de freinage (8);
établir une corrélation entre l'élargissement dudit étrier de frein (2) et la pression de freinage actuellement appliquée; et
réduire la pression de freinage moyennant ladite vanne-pilote afin de commander la pression de freinage du frein à disque hydraulique (1) quand un élargissement dudit étrier de frein (2), qui est affecté à la pression de freinage actuellement appliquée, dépasse une valeur de seuil déterminable en avant.

**10.** Procédé selon la revendication 9, **caractérisé en ce que** ladite vanne-pilote est réglée par voie hydraulique par l'emploi de l'élargissement dudit étrier de frein (2) et la pression de freinage en tant que des paramètres d'entrée.

**11.** Procédé selon la revendication 9, **caractérisé en ce que** ladite vanne-pilote est commandée par un moyen électronique de commande, qui est configuré pour la mesure de l'élargissement dudit étrier de frein (2) et de la pression de freinage moyennant des moyens métrologiques appropriés.

Fig. 1

Fig. 2

Fig. 3

Fig. 4

**EP 2 276 943 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CA 616746 A